# FASCICULE DE BREVET EUROPEEN

(11) **EP 0 324 664 B1**
(45) Date de publication et mention de la délivrance du brevet: **09.06.1993**
(21) Numéro de dépôt: 89400019.9
(22) Date de dépôt: 04.01.1989
(51) Int. Cl.: C25B 1/00, C01G 15/00

(54) **Synthèse de formiate d'indium**
Synthese von Indiumformiat
Synthesis of indium formiate

(30) Priorité: 08.01.1988 FR 8800131
(43) Date de publication de la demande: 19.07.1989
(73) Titulaire: SAINT-GOBAIN VITRAGE INTERNATIONAL, 92400 Courbevoie (FR)
(72) Inventeur: Pegouret, Jean, F-75015 Paris (FR)
(74) Mandataire: Luziau, Nelly

(56) Documents cités:
- EP-A- 0 192 009
- DE-B- 2 260 658
- US-A- 1 879 842

## Description

La présente invention concerne la préparation de formiate d'indium.

Ce formiate d'indium est notamment destiné à être distribué sur des substrats portés à haute température, en particulier du verre, pour former après pyrolyse une couche mince d'oxyde d'indium. Eventuellement, en vue d'améliorer les performances opto-électriques de la couche, le formiate d'indium peut être associé à un dopant du type contenant de l'étain par exemple de l'oxyde de dibutyl étain (DBTO)).

En général les composés destinés à être distribués sur des substrats pour y être pyrolysés peuvent être employés sous différentes formes : vapeur, liquide ou solide.

La demanderesse a mis au point une technique de distribution des composés pyrolysables sous une forme solide, qui présente d'importants avantages comparée aux autres techniques utilisant des vapeurs ou des liquides, qui fournit des résultats très performants et qui en outre est particulièrement bien adaptée à la formation de couches minces sur un ruban de verre fabriqué selon le procédé "float". Selon ce procédé, le verre est fabriqué à grand débit : ainsi il peut être débité sous la forme d'un ruban infini, sur une largeur de l'ordre de 3,50 m à une vitesse comprise entre 6 et 24 m/min, fonction des épaisseurs fabriquées et qui le plus souvent s'échelonne entre 12 et 18 m/min compte tenu des épaisseurs les plus fréquemment commercialisées.

Pour pouvoir fournir de bons résultats dans la technique mettant en oeuvre les composés sous la forme de poudre, lesdits composés en poudre doivent présenter des caractéristiques déterminées, en particulier des caractéristiques morphologiques (forme des grains de poudre, granulométrie, etc...).

En effet pour des questions de rendement, mais également d'aspect de la couche, les grains de poudre doivent atteindre le substrat avec une certaine énergie, donc une certaine vitesse, mais également une certaine masse. Ces grains ne doivent toutefois pas être trop gros sous peine d'entraîner des séries de défauts : risques de tâches dues à l'éclatement de grains trop gros entraînés du fait de leur grande énergie jusqu'aux flammes qui brûlent en sortie de l'installation float, risques de défauts d'aspect dus à la distinction des impacts individuels de chaque grain, etc...

Par ailleurs, il faut que la poudre soit facilement transportable dans tous les dispositifs de dosage et de distribution qui la délivrent à l'aplomb du ruban de verre et pour cela certaines formes de grains sont mieux adaptées que d'autres. Lorsque les couches que l'on désire fabriquer sont des couches de l'ordre du micron d'épaisseur et plus généralement des couches interférentielles, il importe que la distribution de la poudre sur le substrat soit parfaitement régulière et constante sinon il en résulte des irrégularités d'épaisseur de la couche formée qui se traduisent par des variations locales de propriétés, et en particulier par des variations de couleur visibles à l'oeil et rendant le substrat revêtu non commercialisable.

Il importe donc que les caractéristiques morphologiques de la poudre fabriquée soient maitrisables.

Il est connu, notamment par le document de brevet européen 195 009 de fabriquer du formaite d'indium selon les équations suivantes :

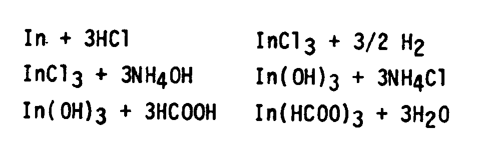

Cette fabrication donne satisfaction, cependant le nombre de paramètres mis en jeu est tel qu'elle ne permet que très difficilement et alors avec séries de réactions supplémentaires à la fois coûteuses et longues, de contrôler la morphologie de la poudre fabriquée ce qui, comme évoqué précédemment présente un grand intérêt pour le procédé de pyrolyse de poudres sur des substrats, en verre notamment.

Par ailleurs cette fabrication nécessite une intervention continuelle, elle est consommatrice de quantités importantes de réactifs, elle exige une installation importante et elle est discontinue.

La présente invention propose une fabrication de formiate d'indium, n'ayant pas les inconvénients du procédé classique évoqué mais présentant par contre l'avantage de fournir des produits ayant une morphologie plus adaptée à l'application envisagée et autorisant un choix de certaines caractéristiques des produits, sans opération supplémentaire, en variant seulement certains paramètres de la fabrication.

Elle propose pour cela un procédé de fabrication de formiate d'indium, par électrosynthèse, plus précisément par oxydation anodique du métal, en particulier de l'indium, dans un bain électrolytique contenant l'acide formique dans le cas de la synthèse de formiate d'indium, sous l'effet du courant électrique.

Le sel apparaît directement à l'état solide sous forme de cristaux en suspension dans le bain électrolytique d'où il est extrait.

Avantageusement un électrolyte support est ajouté au bain électrolytique, notamment pour améliorer la conductivité du bain et de ce fait augmenter la vitesse de production du sel métallique et/ou favoriser sa précipitation.

Avantageusement dans certains cas, l'électrosynthèse est conduite sous courant alternatif, les électrodes anode(s) et cathode(s) étant alors du même métal.

L'invention propose également des cellules d'électrosynthèse favorisant la formation du produit à synthétiser et son extraction.

L'invention propose également des produits, en particulier du formiate d'indium ayant des caractéristiques morphologiques particulières.

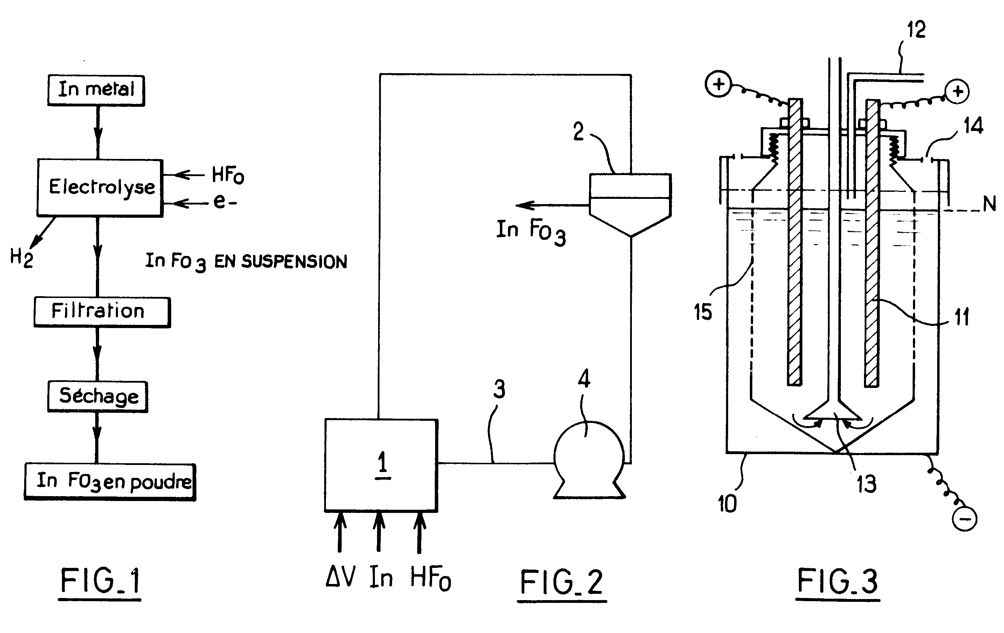

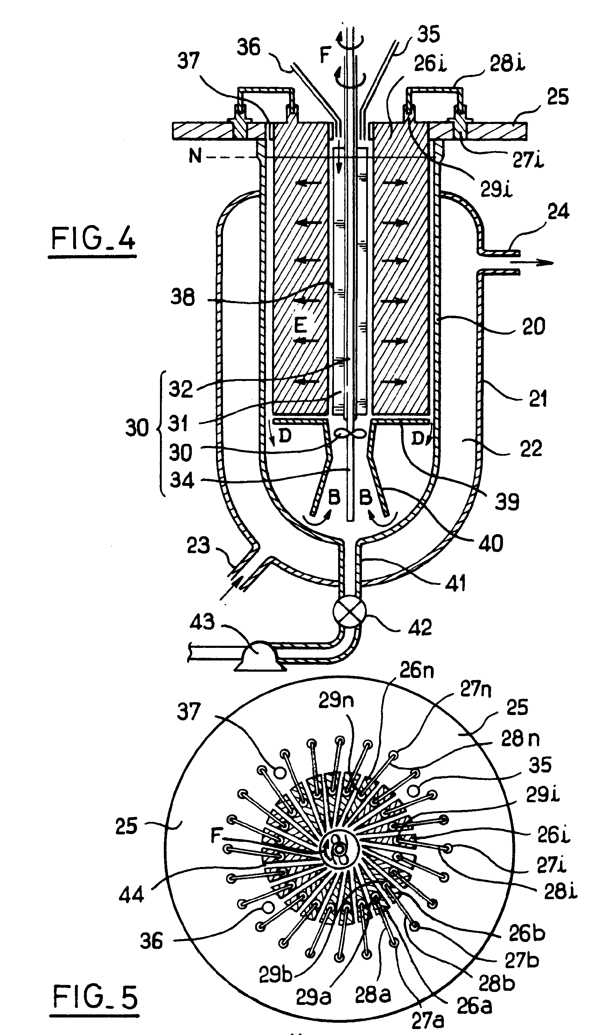

L'invention sera maintenant décrite plus en détail en référence aux figures jointes qui représentent :
. figure 1 : le schéma général de l'électrosynthèse du formaite d'indium,
. figure 2 : le schéma général d'une installation complète de fabrication de formiate d'indium, incluant une cellule d'électrosynthèse,
. figure 3 : le schéma d'une cellule d'électrosynthèse,
. figure 4 : une vue de profil d'une cellule d'électrosynthèse améliorée,
. figure 5 : une vue de dessus de la cellule selon la figure 4, mettant en évidence une forme et une disposition avantageuse des électrodes.

Pour faciliter l'écriture nous prenons les conventions suivantes : le formiate d'indium In(COOH)₃ sera écrit InFo₃,
l'acide formique HCOOH sera écrit HFo.

La fabrication de InFo₃ est menée comme indiquée sur le schéma de principe de la figure 1.

L'indium métallique est disponible en masse pour constituer l'anode (ou les anodes) d'une cellule électrolytique représentée sur les figures 3, 4 et 5 et ayant un bain électrolytique contenant HFo. Dans la cellule électrolytique, du courant électrique est délivré, ce qui conduit suivant la réaction globale : 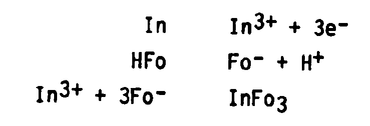 à l'oxydation anodique de l'indium dans l'acide formique et accessoirement au dégagement d'hydrogène.

InFo₃ apparaît directement à l'état solide sous forme de cristaux en suspension dans le bain électrolytique contenant de l'acide formique.

InFo₃ est récupéré sur un filtre, puis séché et il est ainsi disponible en poudre.

Cette opération de synthèse de InFo₃ est accomplie dans une installation illustrée schématiquement figure 2. Cette installation comporte une cellule d'électrolyse 1 ayant des électrodes en In, un bain électrolytique contenant HFo, et alimentée en courant électrique. Dans cette cellule InFo₃ cristallise et est disponible en suspension dans le bain électrolytique. InFo₃ est extrait de la cellule 1 et récupéré sur un filtre 2, puis il est repris sur ce filtre et séché. Avantageusement, l'électrolyte extrait de la cellule 1 en même temps que InFo₃ est séparé au cours de la filtration, et renvoyé dans la cellule 1 par un circuit 3 comprenant une pompe 4.

Un type de cellule d'électrolyse 1 est détaillé sur la figure 3. Elle comprend une cuve 10 métallique formant cathode, notamment en acier inoxydable, une ou plusieurs anodes 11 en indium, une tuyauterie 12 de recyclage des parties de bain électrolytique entraînées avec InFo₃ et/ou d'ajout de bain électrolytique neuf, des moyens 13 d'extraction de InFo₃ du bain électrolytique, notamment par aspiration, des évents 14. Avantageusement une séparation isolante ajourée 15 est prévue entre les électrodes opposées pour éviter tout court circuit.

Une telle installation permet de fabriquer du formaite d'indium, toutefois certaines précautions d'emploi, certaines améliorations de rendement, ont amené à quelque peu modifier cette cellule d'électrolyse de base.

Ainsi, il est apparu qu'au bout d'un certain temps de fonctionnement, de l'indium oxydé pouvait s'accumuler sur l'anode, ce qui pouvait entraîner une passivation de ladite anode. Si l'on travaille à potentiel constant, l'intensité de courant qui traverse les électrodes chute alors, ou si l'on travaille à intensité constante, c'est la tension prélevée qui augmente. Un nettoyage périodique de l'anode permet de continuer à fonctionner.

Toutefois, pour éviter ces inconvénients sans interventions périodiques, il est proposé de n'utiliser que des électrodes en In aussi bien en tant qu'anode, qu'en tant que cathode et d'inverser périodiquement les polarités du courant électrique l'alimentation de la cellule électrolytique. Avantageusement, l'inversion périodique des polarités du courant d'alimentation est obtenue dans certains cas par une alimentation de la cellule en courant alternatif.

Dans la mesure où pour multiplier le rendement de la cellule on augmente le nombre d'anodes et de cathodes, on dispose lesdites anodes et cathodes en position alternée.

Dans ces conditions si les polarités du courant sont périodiquement inversées, les dépôts passivants ne se font plus et les électrodes, aussi bien anode(s) que cathode(s) restent toujours brillantes et aptes à se décomposer pour conduire à la formation de InFo₃.

En outre pour favoriser la formation de InFo₃ et son élimination du bain électrolytique, il est avantageux d'agiter ledit bain. Ainsi InFo₃ formé à proximité des électrodes est entraîné loin de ces électrodes. En même temps, cette agitation évite l'accumulation d'ions indium à la surface du bain électrolytique et la formation de dépôts passivants sur les électrodes.

Cette circulation est aussi avantageusement organisée pour favoriser simultanément l'évacuation des grosses particules d'InFo₃ formées et le recyclage des particules les plus fines pour leur donner la possibilité de croître. Toutefois l'agitation ne doit pas être trop importante, sous peine de faire baisser le rendement coulométrique de l'électrosynthèse.

Par ailleurs, il est avantageux de contrôler la température du bain électrolytique en vue d'une part d'éliminer, au moins partiellement les calories produites naturellement au cours de la synthèse, d'autre part de choisir la température d'opération qui influe sur le rendement de la synthèse et sur la morphologie de la poudre fabriquée.

Ainsi, il apparaît que plus la température est basse plus la taille des particules fabriquées est faible, et que le rendement coulométrique croît quand la température décroît. Pour toutes ces considérations, une température voisine de la température ambiante, c'est-à-dire de l'ordre de 10 à 20° C et de préférence de 15 à 20°C est retenue pour la fabrication du formiate d'indium destiné à être utilisé pour réaliser des couches minces pyrolysées sur du verre. Des températures plus élevées conduisent aussi à la formation de InFo₃, mais les particules formées sont trop longues, (forme en aiguille) pour l'application envisagée, tout du moins avec la technologie actuelle.

Ainsi, si l'on désirait fabriquer des particules en aiguille, il conviendrait de travailler à une température supérieure à 30°C.

Egalement la nature du bain électrolytique importe. Ainsi différents ajouts d'électrolytes supports sont faits à l'électrolyte de base qu'est HFo, en particulier pour assurer ou améliorer la précipitation de InFo₃ notamment par ajustement du pH. Ces ajouts concourent aussi à assurer ou augmenter le pouvoir conducteur du bain électrolytique, à éviter ou réduire la passivation des électrodes ; ils font varier le rendement de l'opération de synthèse et agissent sur la morphologie du produit finalement obtenu.

Parmi les ajouts possibles, on peut citer l'ajout d'adjuvants basiques tels des amines, par exemple la triethyl-amine, de préférence à une concentration moyenne de l'ordre de 1,5M à 2,5M lorsque l'on travaille sous 4,5 volts, des concentrations trop faibles pouvant entraîner l'inconvénient d'une passivation des électrodes que le fonctionnement en alternatif n'arrive pas à compenser et par contre des concentrations trop élevées pouvant par contre retarder la précipitation du formiate d'indium en augmentant sa solubilité, tels également des sels notamment des formiates alcalins (NaFo, NH₄Fo), Fo désignant le formiate d'après les conventions posées au début. Il importe aussi que les amines ajoutées ne forment pas de complexe avec le métal dont on veut fabriquer le sel, en l'occurence avec l'indium. Les limites approximatives de 1,5M à 2,5M sont fonction de la tension de travail et lorsque cette tension croît, ces chiffres indiquant les limites augmentent.

On peut citer aussi l'ajout d'adjuvants acides ne donnant pas de sels d'indium tels l'acide perchlorique ou l'acide trifluorométhane sulfonique (TFMS), ou des sels notamment des perchlorates tels LiClO₄ ou des tétrafluoroborates dont les anions ne précipitent pas avec l'indium. Ainsi en ajoutant LiClO₄ dans HFo à la concentration 1M, on multiplie par environ 100 la densité de courant et on augmente ainsi de façon appréciable le rendement de l'opération de synthèse.

Pour éviter le danger de l'acide perchlorique ou des perchlorates, on leur substitue avantageusement l'acide trifluorométhane sulfonique par exemple à la concentration 0,1M ou des tétrafluoroborates. Toutefois les ajouts acides ne doivent pas être trop importants sous peine de nuire à la précipitation du formiate d'indium. Avec le TFMS, la limite d'acidité est de l'ordre de 1M et de préférence de l'ordre de 0,1M à 0,5M sous une tension de travail de l'ordre de 2 volts, ces concentrations augmentant quand on travaille sous des tensions plus élevées. De préférence, lorsque le bain électrolytique est acide (comparé à HFo considéré comme solvant), l'alimentation de la cellule est toutefois en courant continu.

Certains de ces principes peuvent être mis en oeuvre dans la cellule montrée en figure 3, en particulier ceux portant sur les ajustements de température, de pH, sur la nature du bain électrolytique, sur l'agitation.

Toutefois, les figures 4 et 5 montrent une cellule d'électrolyse perfectionnée dans laquelle tous les principes évoqués ci-dessus peuvent être mis en pratique si désiré.

Cette cellule est constituée d'une cuve 20 entourée d'une enveloppe 21, un liquide réfrigérant et en général thermostaté 22 pouvant circuler entre les deux en étant introduit par l'entrée 23 et en étant extrait par la sortie 24.

La cuve est surmontée d'un plateau 25 qui supporte des électrodes 26a, 26b, ..., 26i,...,26n,..., des amenées de courant 27a, 27b, ...,27i,...,27,..., des cavaliers 28a, 28b,...,28i,...,28n,..., de liaison des plots 29a, 29b,..., 29i,...,29n, solidaires de chaque électrode avec les amenées de courant telles que 27i, le matériel d'agitation 30, les tuyauteries de recyclage 35, le matériel d'introduction d'ajouts 36, des trous 37 d'évents ou d'aspiration des gaz formés, l'hydrogène notamment. La cuve 20 est avantageusement cylindrique d'axe vertical, un espace 38 est réservé en son centre autour de son axe vertical et les électrodes 26i sont réparties à la périphérie de cet espace 38 sur la majeure partie de la hauteur de la cuve. Dans cet espace 38 est logé le matériel d'agitation 30. Ce matériel comprend un rotor 31 entraîné par un arbre vertical tournant 32 centré sur l'axe de la cuve 20 maintenu par des paliers situés en partie haute et non représentés, entraîné par des moyens moteurs également non représentés, et comprend également une hélice 33 située en partie basse de l'espace 38 sous le rotor 31 et les électrodes telles que 26i, montée sur un arbre vertical tournant 34 concentrique avec l'arbre 32, en traîné par des moyens moteurs non représentés à une vitesse qui peut-être différente de celle de l'arbre 32.

Cette cuve 20 possède un fond intermédiaire 39 formant chicane perpendiculaire à son axe vertical disposé sous les électrodes telles que 26i, percé en son centre pour le passage des moyens d'agitation 30. Ce fond intermédiaire est solidaire d'un déflecteur 40 à surface de révolution, disposé sous lui et entourant les moyens d'agitation 30, en particulier l'hélice 33 et son arbre situés à ce niveau. Ce déflecteur 40 descend jusqu'à proximité du fond de la cuve 20 réservant cependant entre ce fond et lui un espace pour la circulation du bain électrolytique. De la même façon des espaces sont réservés à la périphérie des électrodes 26i, et du fond intermédiaire 39, jusqu'à la paroi latérale de la cuve 20 pour permettre la circulation du bain électrolytique. Une canalisation 41 de soutirage du bain électrolytique chargé en formiate d'indium, équipée d'une vanne 42 et d'une pompe 43 pour régler le débit de soutirage est prévue dans le fond de la cuve 20, de préférence au centre. Les électrodes telles que 26i sont mises en place en étant introduites au travers d'orifices correspondant à leur section, au travers du plateau 25, et elles glissent jusqu'à leur position finale montrée sur la figure 4, en étant guidées par des glissières latérales solidaires du plateau 25, non représentées sur les figures et formant un panier qui les maintient.

Avantageusement les électrodes telles que 26i ont toutes la même forme et pour d'une part occuper efficacement la cuve 20 de forme cylindrique et présenter le maximum de surface apte à se décomposer, d'autre part pour faciliter la circulation de l'électrolyte et maintenir des lignes de courant perpendiculaires aux faces des électrodes, lesdites électrodes sont de forme prismatique à section approximativement triangulaire visible sur la figure 5.

Avantageusement également les espaces 44, entre les électrodes 26i sont constants du bord central des électrodes à leur bord périphérique proche de la paroi latérale de la cellule électrolytique, ce qui permet un flux de liquide dans ces espaces 44 à vitesse constante, d'où une usure régulière et homogène sur la surface des électrodes.

Avantageusement, en particulier pour faciliter l'expulsion du liquide entre les électrodes sous l'effet des organes d'agitation 30 et en particulier du rotor 31, les électrodes 26i et les espaces 44 ne sont pas exactement en position radiale, leur position est légèrement vrillée, c'est-à-dire que les pointes des électrodes 26i de forme prismatique sont décalées autour de l'axe vertical central de la cellule dans un sens contraire au sens de rotation des organes d'agitation 30 et en particulier du rotor 31, marqué par la flèche F, comme visible sur les figures 4 et 5.

Les figures 4 et 5 montrent en détail le montage électrique qui permet grâce à des cavaliers amovibles tels que 28i, d'établir la jonction électrique entre les plots 29i appartenant aux électrodes et les amenées de courant 27i fixes et solidaires du plateau 25. Ainsi en soulevant un cavalier tel que 28i il est possible de mettre hors tension l'électrode i correspondante, puis de la soulever et de la sortie de la cellule lorsqu'elle est usée par exemple, pour la remplacer par une neuve, les autres électrodes continuant à être sous tension et la cellule continuant à fonctioner.

Cette opération de changement d'électrode précédemment décrite et la compensation d'acide formique consommé dans InFo₃ ainsi que de l'électrolyte support, par exemple la triéthylamine évaporée, sont les seules opérations à accomplir pour entretenir la cellule électrolytique en fonctionnement.

Cette cellule montrée figures 4 et 5 fonctionne comme décrit ci-après. Au démarrage les électrodes telles que 26i sont mises en place dans leurs paniers accrochés sous le plateau 25, le bain électrolytique est introduit dans la cuve 20 jusqu'à atteindre le niveau marqué N, la circulation du liquide thermostaté est mise en route, le rotor 31 et l'hélice 33 sont mis en rotation. Il s'ensuit un flux du bain électrolytique dans un plan horizontal du centre vers la périphérie de la cuve 20 au travers des espaces 41 entre les électrodes prismatiques suivant les flèches E de la figure 4 et également dans tous les plans verticaux centrés sur l'axe de la cuve 20, une circulation en boucle, descendante à la périphérie de la cuve suivant les flèches D de la figure 4, et remontante le long de l'axe de la cuve à l'intérieur du déflecteur 40 comme indiqué par les flèches B, sous l'effet de l'hélice tournante 33.

Lorsque le branchement électrique est fait entre les électrodes 26i et leurs amenées de courant respectives, la réaction de décomposition des électrodes et de recombinaison des ions indium formés avec les ions formiates a lieu, créant ainsi au sein du bain électrolytique du fait de la nature du bain, de son pH en particulier, du formiate d'indium à l'état solide en suspension.

Les plus grosses particules formées entraînées par les flux de liquide sont entraînées vers le fond de la cuve 20 d'où elles sont éliminées au travers de la canalisation de soutirage 41, le débit de soutirage pouvant être continu et étant réglé grâce à la vanne 42 et à la pompe 43. Les plus fines particules quant à elles, peuvent être réentraînées dans le flux de liquide montant suivant les flèches B de la figure 4 si l'effet créé par l'hélice 33 est suffisamment important, donc si la vitesse de rotation de cette hélice est suffisante. En conséquence la vitesse de rotation de l'hélice 33 influe sur le recyclage des particules formées, donc sur leur taille lors de leur évacuation en dehors du bain électrolytique.

Le choix de la température du bain électrolytique est aisé puisqu' il suffit de varier la température du fluide thermostaté 22 circulant dans l'espace entre la paroi de cuve 20 l'enveloppe 21 jusqu'à obtenir la température désirée du bain électrolytique.

En cours de fonctionnement de la cellule électrolytique, les électrodes s'usent progressivement et l'usure desdites électrodes est homogène du fait en particulier de leur espacement régulier, de leur forme et de leur orientation qui font que les lignes de courant sont à chaque endroit perpendiculaires à leurs faces, du fait également de l'agitation centrale qui provoque une irrigation régulière et uniforme de toutes les électrodes, l'importance de cette irrigation pouvant être réglée en jouant sur la vitesse de rotation du rotor 31 indépendamment de la vitesse de rotation de l'hélice 33.

Les caractéristiques de la cellule se conservent en cours de fonctionnement, malgré l'usure, seule la taille des espaces 41 entre les électrodes augmente progressivement.

En cours de fonctionnement pour compenser les pertes de bain électrolytique, un ajout de bain électrolytique neuf peut être fait par le matériel d'introduction d'ajouts 36.

Lorsque les électrodes sont usées, elles peuvent être changées, sans qu'il soit nécessaire d'interrompre le fonctionnement de l'ensemble de la cellule électrolytique. Les parties non consommées des électrodes usagées, peuvent être refondues (T fusion de l'indium 156°C) puis coulées dans un moule notamment en téflon de la forme prismatique désirée et réutilisées ensuite.

Avantageusement pour favoriser le fonctionnement en continu plusieurs filtres de récupération du formiate d'indium dans le bain électrolytique soutiré, ou un filtre à bande à fonctionnement continu peuvent être employés.

Des batteries de cellules électrolytiques du type de celle décrite en relation avec les figures 4 et 5 peuvent être constituées. A titre d'exemple, on indique qu'une telle cellule contenant 10 litres de bain électrolytique, alimentée par un courant alternatif de 240 ampères délivre approximativement 1 kg de InFo₃ par heure, ce qui compte tenu des dimensions, du faible investissement en matériel effectué, du fonctionnement automatique pratiquement sans intervention sauf pour changer les électrodes corrodées et ajuster le niveau du bain électrolytique, de la qualité du produit fabriqué, constitue une performance très intéressante.

Grâce à ce procédé une action sur les différents paramètres régissant la réaction est possible et il en résulte la possibilité de fabriquer les produits désirés ayant les caractéristiques optimales adaptées au procédé de pyrolyse sur du verre auquel sont destinés lesdits produits.

Ainsi la poudre fabriquée peut posséder sans traitement supplémentaire la taille et la forme désirée. La forme des grains dite en aiguille caractérisée par une longueur importante comparée à la largeur ou le diamètre peut être atteinte dans le procédé de fabrication.

On peut définir les aiguilles par un rapport longueur sur largeur (ou diamètre) supérieur à 5. (L/l supérieur à 5).

Selon l'invention, si désiré, bien que ce ne soit pas une forme avantageuse pour l'application pyrolyse sur du verre, on peut régler les paramètres de fonctionnement de la cellule d'électrolyse pour obtenir des grains ayant une longueur jusqu'à environ une cinquantaine de micromètres et une largeur aussi faible qu'environ 1 micromètre, ce qui correspond à un rapport L/l de l'ordre de 50.

L'application pyrolyse de poudre, notamment contenant du formiate d'indium requiert plutôt des grains dits en batonnets c'est-à-dire ayant une longueur peu différente de la largeur et en général tel que L/l est inférieur à 5. On cherche donc à régler les paramètres de l'électrosynthèse de façon à obtenir des batonnets dont L/l est inférieur à 5. Longueurs et largeurs des grains ne s'appréhendent pas directement ; sont seulement accessibles les diamètres apparents des grains donnés par un granulomètre, notamment un diffractomètre à laser, et des photos des grains au microscope. Cependant les longueurs et les largeurs peuvent être assimilées respectivement aux d₉₀ et d₁₀ fournis par le granulomètre, d₉₀ étant dans une représentation de la distribution des grains en fonction de leur diamètre apparent, le diamètre en dessous duquel 90% en masse des grains présents peuvent être dénombrés, d₁₀ étant le diamètre en dessous duquel seulement 10% en masse des grains peuvent être dénombrés.

Pour les besoins de la pyrolyse sur du verre ou choisit des grains dont les d₁₀ et d₉₀ sont respectivement à 5 et 25 microns ou autrement dit dont les diamètres apparents sont compris entre 5 et 25.

En particulier comme déjà évoqué, on choisit une température ambiante, une température trop élevée conduisant à des aiguilles de InFo₃.

Les poudres ainsi fabriquées ayant les caractéristiques souhaitées sont parfaitement adaptées au revêtement du verre par le procédé de pyrolyse.

Leur rendement de pyrolyse est supérieur à celui obtenu avec des poudres fabriquées selon le procédé classique avant ajustement granulométrique, ce rendement pouvant s'exprimer en épaisseur de couche réalisée avec par exemple 1g de poudre à une température donnée par exemple de 600°C dans des conditions standardisées de pulvérisation. Ainsi avec le formiate d'indium selon l'invention, on atteint des épaisseurs de l'ordre de plus de 350 nanomètres de façon courante. Ceci est un chiffre supérieur aux chiffres irréguliers, obtenus avec les poudres fabriquées de façon traditionnelle.

La constance de qualité de la poudre fabriquée est également un facteur important, constance qu'on ne retrouve pas avec les poudres fabriquées par la méthode traditionnelle.

## Revendications

1. Procédé de fabrication de formiate d'indium, caractérisé en ce qu'on réalise l'oxydation anodique de l'indium sous l'effet du courant électrique dans une cellule électrolytique remplie d'un bain électrolytique contenant de l'acide formique, ayant au moins son (ou ses) anode(s) à base d'indium.

2. Procédé selon la revendication 1, caractérisé en ce que le bain électrolytique est choisi ou ajusté grâce à l'adjonction d'électrolyte support de façon que le formiate d'indium formé y soit insoluble, ce formiate étant alors extrait du bain électrolytique où il est en suspension.

3. Procédé selon la revendication 1 Ou 2, caractérisé en ce que anode(s) ou cathode(s) de la cellule électrolytique sont en même métal.

4. Procédé selon l'une des revendications précédentes, caractérisé en ce qu'on modifie périodiquement les polarités du courant électrique d'alimentation de la cellule électrolytique.

5. Procédé selon l'une des revendications précédentes, caractérisé en ce que comme électrolyte support on introduit des adjuvants basiques dans le bain électrolytique tels des amines notamment la triéthylamine, tels des sels alcalins.

6. Procédé selon la revendication 5, caractérisé en ce que la triéthylamine est en concentration de l'ordre de 1,5M à 2,5M pour une tension de travail de l'ordre de 4,5 volts, ces concentrations augmentant lorsqu'on augmente la tension de travail.

7. Procédé selon l'une des revendications 3 à 6, caractérisé en ce qu'on alimente la cellule électrolytique en courant alternatif.

8. Procédé selon l'une des revendications 1 à 4, caractérisé en ce que comme électrolyte support on introduit des adjuvants acides dans le bain électrolytique tels l'acide perchlorique ou l'acide TFMS ou des sels notamment des perchlorates de lithium en particulier LiClO₄, dont les anions ne précipitent pas avec l'indium.

9. Procédé selon la revendication 8, caractérisé en ce que l'acide TFMS est en concentration inférieure à 1M et de préférence de l'ordre de 0,1M pour une tension de travail de 2 volts, ces concentrations augmentant quand on augmente la tension de travail.

10. Procédé selon l'une des revendications précédentes, caractérisé en ce qu'on assure une agitation du bain électrolytique.

11. Procédé selon la revendication 10, caractérisé en ce que l'agitation est à la fois horizontale centrifuge, et verticale en boucle, de façon à éloigner les particules de formiate formées des parois des électrodes, à les entraîner au fond de la cellule électrolytique et à recycler les trop fines particules formées pour n'extraire que les particules de dimensions adéquates.

12. Procédé selon l'une des revendications précédentes, caractérisé en ce qu'un soutirage du bain électrolytique chargé en formiate fabriqué et en suspension, est pratiqué, notamment à partir du fond de la cellule électrolytique.

13. Procédé selon la revendication 12, caractérisé en ce qu'on recycle le bain électrolytique soutiré après extraction du formiate d'indium formé et en ce qu'on le complète éventuellement.

14. Procédé selon l'une des revendications précédentes, caractérisé en ce que la température du bain est limitée à une température inférieure à 20°C, et est de préférence à une température de l'ordre de 15 à 20°C de façon à favoriser la formation de formiate d'indium en bâtonnets.

15. Procédé selon l'une des revendications 1 à 13, caractérisé en ce que la température du bain est supérieure à 30°C pour favoriser la formation d'aiguilles.

16. Cellule électrolytique pour la mise en oeuvre du procédé selon l'une des revendications précédentes, caractérisée en ce qu'elle comporte au moins une anode constituée d'indium dans un bain électrolytique contenant de l'acide formique.

17. Cellule électrolytique selon la revendication 16, caractérisée en ce que le bain électrolytique est tel ou ajusté de telle façon que le formiate d'indium formé y soit insoluble.

18. Cellule électrolytique selon l'une des revendications 16 ou 17, caractérisée en ce que la cathode est constituée par la cuve elle-même de la cellule, une membrane isolante de sécurité étant prévue entre cathode et anode(s).

19. Cellule électrolytique selon l'une des revendications 16 ou 17, caractérisée en ce qu'elle comprend une cuve, une pluralité d'électrodes identiques à base d'indium plongeant dans la cuve alimentées électriquement, des moyens d'agitation au centre de la cuve, un orifice de soutirage équipé d'une vanne et d'une pompe.

20. Cellule selon la revendication 19, caractérisée en ce que la cuve est globalement cylindrique, que les électrodes prismatiques à section sensiblement triangulaire sont disposées avec leur génératrice parallèle à l'axe vertical de la cuve cylindrique sur le pourtour de ladite cuve en réservant au centre un espace pour les moyens d'agitation tournants.

21. Cellule selon la revendication 20, caractérisée en ce que la disposition des électrodes est vrillée par rapport à une position où elles seraient exactement radiales, la génératrice des électrodes proches du centre de la cellule étant décalée dans le sens opposé au sens de rotation des moyens d'agitation.

22. Cellule selon l'une des revendications 16, 17 et 19, 21, caractérisée en ce qu'elle possède un fond intermédiaire formant chicane et un déflecteur central sous le fond intermédiaire ainsi qu'un orifice de soutirage au centre du fond de la cuve.

23. Cellule selon l'une des revendications 16, 17 et 19, 22, caractérisée en ce que les espaces entre les électrodes sont identiques.

24. Cellule selon les revendications 16, 17 et 19, 22, caractérisée en ce qu'elle est alimentée en courant alternatif.

25. Cellule selon les revendications 16 à 24, caractérisée en ce qu'elle possède une pluralité de filtres de récupération du sel formé ou un filtre à bande à fonctionnement continu.

26. Poudre de formiate d'indium apte à une application par pyrolyse sur du verre en vue de la formatiçn de couches minces, caractérisée en ce qu'elle présente, sans broyage ou reclassification, une forme en bâtonnets, avec des d₁₀ et d₉₀ fixés à 5 et 25 microns.

## Patentansprüche

1. Verfahren zur Herstellung von Indiumformiat, **dadurch gekennzeichnet**, daß die anodische Oxidation des Indiums durch elektrischen Strom in einer Elektrolysezelle erfolgt, wenigstens deren Anode/n auf der Grundlage von Indium hergestellt ist/sind, und in der sich eine Ameisensäure enthaltende Elektrolytlösung befindet.

2. Verfahren nach Anspruch 1, **dadurch gekennzeichnet**, daß die Elektrolytlösung derart ausgewählt oder mittels Zugabe von Trägerelektrolyt eingestellt ist, daß das gebildete Indiumformiat in ihr unlöslich ist und es anschließend aus der Elektrolytlösung, worin es suspendiert ist, gewonnen wird.

3. Verfahren nach Anspruch 1 oder 2, **dadurch gekennzeichnet**, daß die Anode/n oder Kathode/n der Elektrolysezelle aus demselben Metall bestehen.

4. Verfahren nach einem der vorhergehenden Ansprüche, **dadurch gekennzeichnet**, daß die Polarität des elektrischen Stroms, der an der Elektrolysezelle anliegt, periodisch verändert wird.

5. Verfahren nach einem der vorhergehenden Ansprüche, **dadurch gekennzeichnet**, daß als Trägerelektrolyt basische Zusätze wie Amine, insbesondere Triethylamin, und Alkalisalze zugegeben werden.

6. Verfahren nach Anspruch 5, **dadurch gekennzeichnet**, daß das Triethylamin in einer Konzentration von etwa 1,5 bis 2,5 m bei einer Arbeitsspannung von etwa 4,5 V vorliegt, wobei diese Konzentration zu erhöhen ist, wenn die Arbeitsspannung erhöht wird.

7. Verfahren nach einem der Ansprüche 3 bis 6, **dadurch** **gekennzeichnet**, daß an der Elektrolysezelle Wechselstrom anliegt.

8. Verfahren nach einem der Ansprüche 1 bis 4, **dadurch** **gekennzeichnet**, daß als Trägerelektrolyt saure Zusätze wie Perchlorsäure oder Trifluormethansulfonsäure (TFMS) oder Salze, insbesondere Perchlorate und besonders bevorzugt LiClO₄, deren Anionen mit Indium nicht ausfällen, zur Elektrolytlösung gegeben werden.

9. Verfahren nach Anspruch 8, **dadurch gekennzeichnet**, daß die TFMS in einer Konzentration von unter 1 m und vorzugsweise von etwa 0,1 m bei einer Arbeitsspannung von 2 V vorliegt, wobei die Konzentration zu erhöhen ist, wenn die Arbeitsspannung erhöht wird.

10. Verfahren nach einem der vorhergehenden Ansprüche, **dadurch gekennzeichnet**, daß die Elektrolytlösung gerührt wird.

11. Verfahren nach Anspruch 10, **dadurch** **gekennzeichnet**, daß gleichzeitig in horizontaler Richtung zentrifugal und in vertikaler Richtung kreisförmig derart gerührt wird, daß die gebildeten Formiatpartikeln von den Elektrodenwandungen entfernt werden, um sie zum Boden der Elektrolysezelle zu führen und die zu kleinen gebildeten Partikeln zu rezirkulieren, so daß nur die Partikeln der gewünschten Abmessungen abgezogen werden.

12. Verfahren nach einem der vorhergehenden Ansprüche, **da- durch** **gekennzeichnet**, daß die mit dem suspendierten hergestellten Formiat beladene Elektrolytlösung, insbesondere vom Boden der Elektrolysezelle, abgezogen wird.

13. Verfahren nach Anspruch 12, **dadurch** **gekennzeichnet**, daß die abgezogene Elektrolytlösung nach der Gewinnung des gebildeten Indiumformiats rezirkuliert und gegebenenfalls ergänzt wird.

14. Verfahren nach einem der vorhergehenden Ansprüche, **dadurch gekennzeichnet**, daß die Temperatur der Elektrolytlösung auf eine Temperatur von unter und bis zu 20 °C und vorzugsweise auf eine Temperatur von etwa 15 bis 20 °C derart begrenzt wird, daß die Bildung von stäbchenförmigem Indiumformiat begünstigt wird.

15. Verfahren nach einem der Ansprüche 1 bis 13, **dadurch** **gekennzeichnet**, daß die Temperatur der Elektrolytlösung über 30 °C liegt, um die Bildung von Nadeln zu begünstigen.

16. Elektrolysezelle zur Durchführung des Verfahrens nach einem der vorhergehenden Ansprüche, **dadurch** **gekennzeichnet**, daß sie wenigstens eine aus Indium bestehende Anode in einer Ameisensäure enthaltenden Elektrolytlösung umfaßt.

17. Elektrolysezelle nach Anspruch 16, **dadurch** **gekennzeichnet**, daß die Elektrolytlösung derart beschaffen oder eingestellt ist, daß das gebildete Indiumformiat darin unlöslich ist.

18. Elektrolysezelle nach Anspruch 16 oder 17, **dadurch** **gekennzeichnet**, daß die Zellenwanne die Kathode bildet und eine Sicherheitsisolationsmembran zwischen Kathode und Anode/n vorgesehen ist.

19. Elektrolysezelle nach Anspruch 16 oder 17, **dadurch** **gekennzeichnet**, daß sie eine Wanne, mehrere gleiche Elektroden auf Indiumgrundlage, welche in die elektrisch angeschlossene Wanne tauchen, Rühreinrichtungen in der Mitte der Wanne und einen mit einem Schieber und einer Pumpe ausgerüsteten Abfluß umfaßt.

20. Zelle nach Anspruch 19, **dadurch** **gekennzeichnet**, daß die Wanne ungefähr zylindrisch ist, die prismatischen Elektroden, welche einen ungefähr dreieckigen Querschnitt aufweisen, mit ihrer Mantellinie parallel zur senkrechten Achse der zylindrischen Wanne über deren Umfang angeordnet sind und in ihrer Mitte Raum für die Rühreinrichtungen bleibt.

21. Zelle nach Anspruch 20, **dadurch** **gekennzeichnet**, daß die Elektrodenanordnung bezüglich einer genau radialen Position verdreht und die Mantellinie der nahe der Zellenmitte befindlichen Elektrodenteile gegenläufig zur Umdrehungsrichtung der Rühreinrichtungen versetzt ist.

22. Zelle nach einem der Ansprüche 16, 17, 19 und 21, **dadurch gekennzeichnet**, daß sie einen ein Umlenkblech bildenden Zwischenboden, ein mittiges Leitblech unter dem Zwischenboden und in der Mitte des Wannenbodens einen Abfluß aufweist.

23. Zelle nach einem der Ansprüche 16, 17, 19 und 22, **dadurch gekennzeichnet**, daß die Zwischenräume zwischen den Elektroden gleich sind.

24. Zelle nach den Ansprüchen 16, 17, 19 und 22, **dadurch** **gekennzeichnet**, daß an ihr Wechselstrom anliegt.

25. Zelle nach den Ansprüchen 16 bis 24, **dadurch** **gekennzeichnet**, daß sie mehrere Filter zur Gewinnung des gebildeten Salzes oder einen kontinuierlich arbeitenden Bandfilter aufweist.

26. Indiumformiatpulver, das zur Herstellung von dünnen Schichten auf Glas durch Pyrolyse verwendet werden kann, **dadurch** **gekennzeichnet**, daß es ohne Zerkleinern oder Klassierung eine Stäbchenform mit auf 5 und 25 m festgelegten d₁₀ und d₉₀ aufweist.

## Claims

1. Method for the production of indium formate, characterized in that the anodic oxidation of the indium is carried out under the effect of the electrical current in an electrolytic cell filled with an electrolyte bath containing formic acid, and having at least its anode or anodes based upon indium.

2. Method according to Claim 1, characterized in that the electrolyte bath is chosen or adjusted by making-up with a support electrolyte in such a way that the indium formate formed shall be insoluble therein, this formate then being extracted from the electrolyte bath, in which it is in suspension.

3. Method according to Claim 1 or 2, characterized in that the anode(s) or cathode(s) of the electrolytic cell are of the same metal.

4. Method according to one of the preceding Claims, characterized in that the polarities of the electrical supply current to the electrolytic cell are periodically changed.

5. Method according to one of the preceding Claims, characterized in that, as support electrolyte, basic admixtures such as amines, notably triethylamine, or such as alkaline salts, are introduced into the electrolyte bath.

6. Method according to Claim 5, characterized in that the triethylamine is in a concentration of the order of 1.5M to 2.5M for an operating voltage of the order of 4.5 volts, these concentrations increasing when the operating voltage is increased.

7. Method according to one of Claims 3 to 6, characterized in that the electrolytic cell is supplied with alternating current.

8. Method according to one of Claims 1 to 4, characterized in that, as support electrolyte, acid admixtures, such as perchloric acid or trifluoromethane sulphonic acid (TFMS acid), or salts, notably lithium perchlorates, in particular LiClO₄, the anions of which do not precipitate with indium, are introduced into the electrolyte bath.

9. Method according to Claim 8, characterized in that the TFMS acid is in a concentration less than 1M and preferably of the order of 0.1M for an operating voltage of 2 volts, these concentrations increasing when the operating voltage is increased.

10. Method according to one of the preceding Claims, characterized in that stirring of the electrolyte bath is performed.

11. Method according to Claim 10, characterized in that the stirring is both horizontally centrifugal and vertical in a loop, in such a way as to move the particles of formate formed away from the faces of the electrodes, to entrain them to the bottom of the electrolytic cell and to recycle the too fine particles formed so that only particles of adequate dimensions are extracted.

12. Method according to one of the preceding Claims, characterized in that a draw-off from the electrolyte bath, charged with formate formed and in suspension, is carried out, notably from the bottom of the electrolytic cell.

13. Method according to Claim 12, characterized in that the drawn-off electrolyte bath is recycled after extraction of the indium formate formed and in that if necessary it is topped up.

14. Method according to one of the preceding Claims, characterized in that the temperature of the electrolyte bath is limited to a temperature of less than 20°C, and is preferably at a temperature of the order of 15 to 20°C, in such a way as to promote the formation of indium formate as pellets.

15. Method according to one of Claims 1 to 13, characterized in that the temperature of the bath is higher than 30°C to promote the formation of needles.

16. Electrolytic cell for carrying out the method according to one of the preceding Claims, characterized in that it comprises at least one anode constituted of indium in an electrolyte bath containing formic acid.

17. Electrolytic cell according to Claim 16, characterized in that the electrolyte bath is such that or is adjusted so that the indium formate formed shall be insoluble therein.

18. Electrolytic cell according to one of Claims 16 or 17, characterized in that the cathode is formed by the tank itself of the cell, an insulating safety membrane being provided between cathode and anode(s).

19. Electrolytic cell according to one of Claims 16 or 17, characterized in that it comprises a tank, a plurality of identical electrodes based upon indium immersed in the tank and electrically supplied, means for stirring at the centre of the tank, and a discharge orifice equipped with a valve and a pump.

20. Cell according to Claim 19, characterized in that the tank is cylindrical overall, that the prismatic electrodes, of substantially triangular cross-section, are disposed with their generatrix parallel to the vertical axis of the cylindrical tank around the periphery of said tank, leaving at the centre a space for the revolving stirring means.

21. Cell according to Claim 20, characterized in that the arrangement of the electrode is spiral with respect to a position in which they would be exactly radial, the generatrix of the electrodes nearest the centre of the cell being offset in the direction opposite to the direction of rotation of the stirring means.

22. Cell according to one of Claims 16, 17 and 19, 21, characterized in that it possesses an intermediate base forming a baffle and a central deflector beneath the intermediate base and also a discharge orifice at the centre of the bottom of the tank.

23. Cell according to one of Claims 16, 17 and 19, 22, characterized in that the spaces between the electrodes are identical.

24. Cell according to one of Claims 16, 17 and 19, 22, characterized in that it is supplied with alternating current.

25. Cell according to Claims 16 to 24, characterized in that it possesses a plurality of filters for recovering the salt formed or a continuously operating band filter.

26. Indium formate powder suitable for being applied by pyrolysis onto glass for the purpose of forming thin films, characterized in that it has, without crushing or regrading, a form of pellets, with d₁₀ and d₉₀ fixed at 5 and 25 microns.
